# EUROPEAN PATENT APPLICATION

(11) **EP 4 113 434 A1**
(43) Date of publication of application: **04.01.2023**
(21) Application number: 21290042.7
(22) Date of filing: 28.06.2021
(51) Int. Cl.: G06T 7/00, G06T 7/10

(54) **GENERATION OF PLAQUE INFORMATION**

(71) Applicant: Koninklijke Philips N.V., 5656 AG Eindhoven (NL)
(72) Inventor: Collet-Billon, Antoine, 5656 AE Eindhoven (NL); Rouet, Laurence, 5656 AE Eindhoven (NL); Entrekin, JRobert Randall, 5656 AE Eindhoven (NL)
(74) Representative: Philips Intellectual Property & Standards

(57) **Abstract**

An approach for generating plaque information by processing a 3D medical image representing an arterial region. Image regions, of the 3D medical region, are identified, each image region representing a portion of a different artery and/or arterial branch. The 3D medical image is also processed via a segmentation technique to generate a plaque model representing the plaque found in the 3D medical image. The image regions are then used to identify different plaque regions of the plaque model, each plaque region representing plaque in a portion of a different artery and/or arterial branch.

## Description

### FIELD OF THE INVENTION

The present invention relates to the field of medical imaging processing, and in particular to the identification of (atherosclerotic) plaque in medical images.

### . BACKGROUND OF THE INVENTION

There is an increasing awareness of the impact of cardiovascular disease on longevity of life, and it has been identified that cardiovascular disease is a significant cause of death in a number of countries. The diagnosis, treatment and effects of cardiovascular disease have a significant impact on patients'/subjects' quality of life.

One of the root causes of many cardiovascular diseases is the presence of (atherosclerotic) plaque. In particular, it has been identified that an increase in the amount of plaque in the arteries results in increased likelihood of cardiovascular disease. A number of studies have identified that an amount of plaque burden is a significant risk factor for heart attacks and/or strokes in asymptomatic adults.

There is therefore an ongoing desire to improve the identification of plaque, and to improve the clinical relevance of information about plaque available to clinicians for use in assessing and diagnosing a patient or subject.

### SUMMARY OF THE INVENTION

The invention is defined by the claims.

There is proposed a computer-implemented method of generating plaque information of a subject.

The computer-implemented method comprises: obtaining a 3D medical image comprising a representation of an arterial region of the subject, the arterial region containing at least two connected artery portions, each artery portion belonging to a different artery of the subject; performing image segmentation on the 3D medical image to identify, in the 3D medical image, two or more image regions, each image region representing a different artery portion of the arterial region; processing the 3D medical image to generate a 3D plaque model, being a 3D model of plaque found in the arterial region represented in the 3D medical image; and determining, based on the identified image regions of the 3D medical image, plaque regions of the 3D plaque model, each plaque region being a region of the 3D plaque model that represents plaque of a different artery portion of the arterial region.

The proposed invention provides a mechanism for generating a 3D plaque model, for which it is known which parts or regions of the 3D plaque model represents a particular artery or arterial branch of an arterial region of a subject. The invention recognizes that plaque information on an artery region basis (i.e. for different arteries) provides useful clinical information for assessing the condition of a subject. In particular, certain diseases or conditions are more likely to happen and/or more likely to be diagnosable based on information about plaque within particular arteries. By increasing an ease of distinguishing plaque of different arteries from one another, through the use of plaque regions, an increase in the ease of assessing certain medical conditions is increased.

A 3D medical image is processed to identify regions that represent different arteries of subject. The 3D medical image is also processed to generate a 3D model of plaque (the "3D plaque model"). Parts of the 3D plaque model that represent the plaque of different arteries are then identified.

A 3D medical image may be formed of any data that can be processed to provide a display of a 3D model of an anatomical region of the subject, and in particular of the arterial region of the subject. The 3D medical image may, for instance, be formed of a stack of 2D images and/or a 3D matrix of voxels representing the 3D medical image. Other suitable data structures would be apparent to the skilled person. The 3D medical image may comprise a 3D ultrasound image, a 3D magnetic resonance image, a 3D x-ray image (e.g. a CT image) and so on.

As the 3D plaque model is generated from the 3D medical image, it can be registered with respect to the 3D medical image. This facilitates determining which parts of the 3D plaque model correspond to different arteries of the arterial region.

The term 3D is considered interchangeable with the term three-dimensional. In the context of the present disclosure, plaque is atherosclerotic plaque, such that any reference to the term "plaque" could be replaced by the term "atherosclerotic plaque" if desired. In the context of the present disclosure, different arteries or arterial branches are given different medical identities. For instance, the carotid artery includes at least three arterial branches: the common carotid artery, internal carotid artery and the external carotid artery. These can be treated as different arteries or arterial branches, depending upon nomenclature.

The arterial region may include a portion of the common carotid artery, a portion of the internal carotid artery and a portion of the external carotid artery. In another example, the arterial region comprises a portion of the common femoral artery, a portion of the superficial femoral artery and a portion of the femoral profunda artery. It is herein recognized that information about these arterial region provides particularly useful clinical information for assessing or diagnosing a subject.

The method may comprise a step of controlling a user interface to provide a visual representation of the 3D plaque model, wherein the visual representation further identifies each plaque region of the 3D plaque model.

The method may comprise a step of processing the 3D medical image to generate a 3D arterial region model, being a 3D model of the outer bounds of all the artery portions contained in the arterial region of the subject represented in the 3D medical image.

The method may comprise a step of controlling a user interface to provide a visual representation of the 3D arterial region model.

The step of controlling the user interface to provide a visual representation of the 3D plaque model may comprise: providing a visual representation of the 3D plaque model and the 3D arterial region model at the user interface registered with respect to one another.

The step of processing the 3D medical image to generate a 3D plaque model may comprise: processing the 3D medical image to generate a 3D lumen model, being a 3D model of any lumens in the arterial region; and processing the 3D arterial region model and the 3D lumen model to calculate the 3D plaque model.

Plaque is the region located between the outer bounds of the arteries (i.e. the outer bounds of the vessel and the lumen boundaries, e.g. that results from the growth of the intima layer of the artery during the progressive onset of atherosclerosis. This embodiment proposes an approach for generating the plaque map that makes use of methods for detecting the lumen boundaries and the artery boundaries, with the plaque falling between these two boundaries.

In some examples, each image region represents a centerline of a different artery portion of the arterial region.

The method may further comprise processing each plaque region to calculate a measure of plaque in each artery portion of the arterial region.

It is recognized that a measure of plaque in different arteries provides useful clinical information for assessing a patient. In particular, a plaque burden in certain arteries may be more symptomatic or more indicative of risk for cardiovascular disease than other arteries. By way of example only, plaque build-up in the external carotid artery is less problematic (e.g. less risk of cardiovascular problems) than plaque build-up in the common and internal carotid arteries.

Providing artery-specific information on the measure of plaque thereby provides useful clinical information for aiding a clinician in assessing a condition and/or diagnosis of a subject.

The method may further comprise a step of controlling a user interface to provide a visual representation of the calculated measure of plaque in each artery of the arterial region.

In some examples, the measure of plaque is a volume of plaque. In other examples, the measure of plaque is a relative volume of plaque, e.g. compared to a total amount of plaque represented by the plaque model.

The computer-implemented method may further comprise: receiving a user input providing a user-indicated position on the 3D plaque model; and generating a partial 3D plaque model by processing the 3D plaque model and the user-indicated position, the generating comprising: identifying a selected plaque region, being the plaque region of the 3D plaque model that contains the user-indicated position; and removing, from the 3D plaque model, a section of the selected plaque region that extends from the user-identified position away from the other plaque regions of the 3D plaque model.

Of course, in some examples, a second partial 3D plaque model may be generated that includes (e.g. consists of) the section of the selected plaque region that was removed from the (first) 3D plaque model to produce the partial plaque model.

The method may comprise a step of controlling a user interface to provide a visual representation of the partial 3D plaque model. The method may further comprise controlling the user interface to provide a visual representation of the second partial 3D plaque model, e.g. with a visual indicator indicating a position of the boundary between the partial 3D plaque model and the second partial 3D plaque model.

In some examples, a further user input may be received that identifies which partial 3D plaque model(s) to display. The method may control the user interface responsive to the further user input, e.g. to provide a visual representation of the identified partial 3D plaque model(s).

The process of receiving a user input providing a user-indicated position on the 3D plaque model may be iteratively repeated, e.g. with respect to any partial 3D plaque model generated, responsive to each user input received.

There is also proposed a computer program product comprising computer program code means which, when executed on a computing device having a processing system, cause the processing system to perform all of the steps of any herein described (computer-implemented) method. The computer program product may be formed of a (non-transitory) computer-readable medium.

There is also proposed a processing system for generating plaque information of a subject.

The processing system is configured to: obtain a 3D medical image comprising a representation of an arterial region of the subject, the arterial region containing at least two connected artery portions, each artery portion belonging to a different artery of the subject; perform image segmentation on the 3D medical image to identify, in the 3D medical image, two or more image regions, each image region representing a different artery portion of the arterial region; process the 3D medical image to generate a 3D plaque model, being a 3D model of plaque found in the arterial region represented in the 3D medical image; and determine, based on the identified image regions of the 3D medical image, plaque regions of the 3D plaque model, each plaque region being a region of the 3D plaque model that represents plaque of a different artery portion of the arterial region.

The 3D medical image may be obtained from a memory or storage system, or directly from a medical imaging device.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
- Fig. 1: is a flowchart illustrating a method according to an embodiment;
- Fig. 2: schematically illustrates image regions, each representing a different artery portion;
- Fig. 3: illustrates an arterial portion model;
- Fig. 4: illustrates an approach for generating a lumen model;
- Fig. 5: illustrates a plaque model;
- Fig. 6: illustrates plaque regions of a plaque model;
- Fig. 7: is a flowchart illustrating a method according to an embodiment;
- Fig. 8: illustrates a partial plaque model;
- Fig. 9: illustrates a system according to an embodiment; and
- Fig. 10: illustrates a processing system according to an embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an approach for generating plaque information by processing a 3D medical image representing an arterial region. Image regions, of the 3D medical region, are identified, each image region representing a portion of a different artery and/or arterial branch. The 3D medical image is also processed via a segmentation technique to generate a plaque model representing the plaque found in the 3D medical image. The image regions are then used to identify different plaque regions of the plaque model, each plaque region representing plaque in a portion of a different artery and/or arterial branch.

Embodiments of the invention advantageously recognize that plaque information on an artery-by-artery basis (i.e. per artery portion) provides valuable information for assessing the condition and/or status of a subject. In particular, certain medical conditions or diagnoses may result from plaque build-up in only some of the arteries found in an arterial region (rather than a total amount of plaque found in all arterial regions).

The proposed concepts can be employed in any suitable clinical environment in which a 3D medical image of an arterial region, for the purposes of investigating plaque, is generated. The proposed concepts are of particular use in the field of cardiac imaging and identification of possible blockage or clotting.

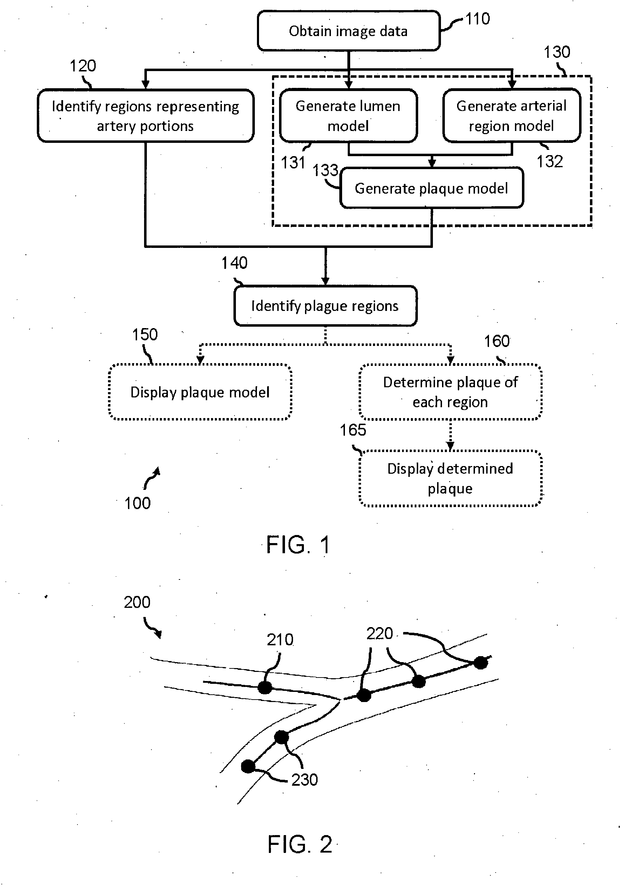

Fig. 1 is a flowchart illustrating a (computer-implemented) method 100 according to an embodiment. The method is configured to generate a 3D plaque model of an arterial region and identify plaque regions of the 3D plaque model, each plaque region representing a different artery/arterial portion of the arterial region.

The method comprises a step 110 of obtaining a 3D medical image comprising a representation of an arterial region of the subject. An arterial region is a region that contains at least two connected artery portions, each artery portion belonging to a different artery and/or arterial branch of the subject.

The 3D medical image may be generated by any suitable 3D medical imaging device, e.g. a 3D CT scanner, a 3D ultrasound scanner, a 3D MRI scanner and so on.

The arterial region may, for instance, comprise a bifurcation, e.g. a position or junction at which two arterial portions connect to another arterial portion. One example of a suitable arterial region comprises a portion of the common carotid artery, a portion of the internal carotid artery and a portion of the external carotid artery (all of which represent different arterial branches). Another example of a suitable arterial region comprises a portion of the brachial artery, the ulnar artery and the radial artery. Yet another example of a suitable arterial region comprises a portion of the popliteal artery, the anterior tibial artery and the posterior tibial artery. A further example of a suitable arterial region comprises a portion of the common femoral artery, a portion of the superficial femoral artery and a portion of the femoral profunda artery.

The 3D medical image is then processed in two separate paths.

In one path, the method performs a step 120 of identifying image regions (of the 3D medical image) that represent different artery portions. In other words, step 120 may comprise performing an artery portion identification process for the medical image.

In one example, step 120 comprises processing the 3D medical image using a segmentation algorithm to identify the different artery portions (i.e. the different portions of the image that represent an artery).

In another example, step 120 comprises receiving two or more sets of one or more user-defined points (with respect to the 3D medical image), wherein each set of one or more user-defined points identifies a different artery portion. The position of each set of one or more user-defined points defines .a position and/or identity of a centerline for each artery portion.

In one example, step 120 comprises obtaining an arterial region model and processing the arterial region model to identify the centerlines of arteries within the arterial region model. This may make use of a skeletonization technique, such as that disclosed by Wang, Chunliang, and Orjan Smedby.

"An automatic seeding method for coronary artery segmentation and skeletonization in CTA." The Insight Journal 43 (2008): 1-8 or Smistad, Erik, Anne C. Elster, and Frank Lindseth. "GPU accelerated segmentation and centerline extraction of tubular structures from medical images." International journal of computer assisted radiology and surgery 9.4 (2014): 561-575. A variety of other approaches for generating a centerline from an artery model will be apparent to the skilled person.

The sets of one or more user-defined points may define to which artery portion different centerlines belong. For instance, the user-defined points may define where a center-line for a particular artery portion starts and/or ends.

In particular examples, an identified (part of a) centerline may be assigned to a particular artery portion based on proximity of the centerline to a user-defined point identifying that artery portion (i.e. the artery portion of the closest user-defined point may be assigned to a particular part of a centerline).

In other examples, the user-defined points explicitly identify (on the centerline) the end of an artery portion.

Step 120 may obtain the arterial region model generated in another path of method 100, e.g. as generated in step 131 as later described.

Fig. 2 conceptually illustrates an approach for performing step 120 of identifying image regions. In particular, a 3D medical image 200 (of which only a single slice is illustrated) is processed to identify the image regions. Here, the 3D medical image comprises three separate portions of different arteries.

A plurality of sets 210, 220, 230 of one or more points is received (e.g. responsive to a user input), each set identifying a different artery and/or arterial branch. Each set of points are then processed to identify a centerline for each artery portion. This may comprise, for instance, processing preidentified centerlines (as identified from a skeletonization approach) using the set of one or more points to identify to which artery (portion) a particular centerline belongs.

An image region may comprise a centerline that passes through a representation of a corresponding artery portion represented in the 3D medical image. In another example, an image region may comprise a segmentation result that identifies an image region wholly containing the corresponding portion (i.e. and no other artery portion).

In another path, the method 100 performs a process 130 of generating a 3D plaque model. A 3D plaque model may be a 3D representation of the plaque in the arterial region represented in the 3D medical image.

Process 130 may comprise, for instance, a step 132 of generating an arterial region model. An arterial region model may be a 3D representation of the arterial region represented in the 3D medical image, and in particular, is a 3D model of the outer bounds of all the artery portions contained in the arterial region of the subject represented in the 3D medical image. The arterial region model may be generated, for example, by performing an automatic detection of the vessel, e.g. using an image segmentation technique such as those previously described.

One approach for generating an arterial region model is disclosed by Rouet, Laurence, et al. "A minimally interactive and reproducible method for abdominal aortic aneurysm quantification in 3D ultrasound and computed tomography with implicit template deformations." Computerized Medical Imaging and Graphics 58 (2017): 75-85.

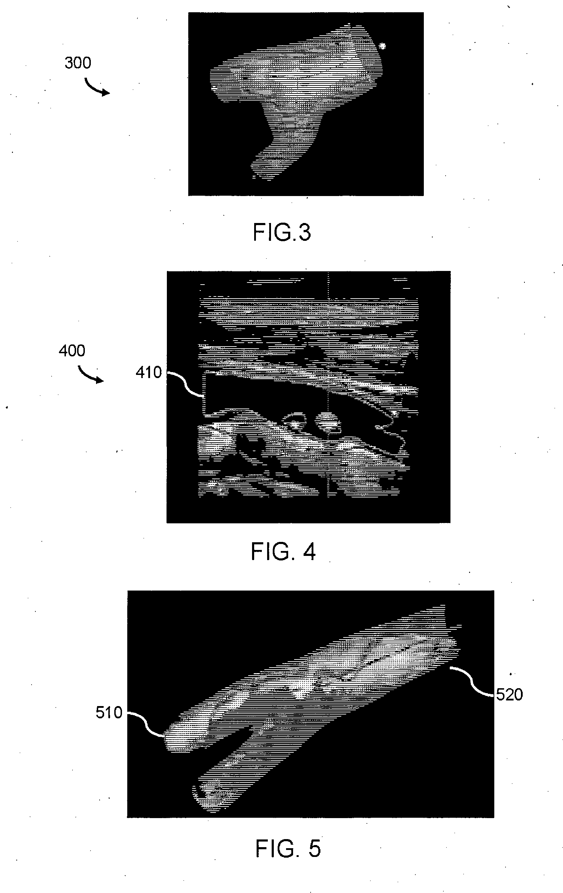

One arterial region model 300 is illustrated in Fig. 3. Here, the arterial region model is a deformed model adapted to the contours of the patient-specific arterial region. This is performed by iteratively adjusting a (3D) deformable model to meet the contours of the arterial region in the 3D medical image.

Turning back to Fig. 1, process 130 may also comprise, for instance, a step 131 of generating a lumen model. A lumen model is a 3D model of any lumens contained in the arterial region representing in the 3D medical image. A lumen is the cavity within an artery portion, and may be filled with blood.

Step 131 may comprise, for instance, segmenting the 3D medical image using a segmentation approach to identify lumens in the arterial region.

Fig. 4 illustrates an approach for generating a lumen model. Fig. 4 illustrates a segmented slice 400 of the 3D medical image, where the segmentation identifies a lumen 410 of an artery potion. The bounds of the 3D segmentation may define the lumen model, as would be readily apparent to the skilled person.

European Patent Application having publication number EP1820156A2 discloses a technique for segmentation of parts of a blood vessel, e.g. an artery, including the lumen and the outer bounds of the blood vessel. This approach may be employed in step 131 and/or step 132.

Other methods for generating a lumen model and/or arterial region model are disclosed in. "Fast delineation and visualization of vessels in 3-D angiographic images" by O. Wink et al., IEEE TMI, 19 (4): 337-346, April 2000; "Reconstruction and web distribution of measurable arterial models" by M. Toveri et al., Medical Image Analysis, 7 (1): 79-93, March 2003). Other approaches would be readily apparent to the skilled person.

Another approach for building a model of a lumen is disclosed by Fenster, Aaron, et al. "3D ultrasound imaging of the carotid arteries." Current Drug Targets-Cardiovascular & Hematological Disorders 4.2 (2004): 161-175. In this example, a deformable balloon model is placed in the lumen of a 3D medical image, inflated towards the plaque surface and then automatically localized with respect to the plaque surface.

Yet another approach for building a model of a lumen is disclosed by Hossain, Md Murad, et al. "Semiautomatic segmentation of atherosclerotic carotid artery wall volume using 3D ultrasound imaging." Medical physics 42.4 (2015): 2029-2043.

Referring back to Fig. 1, process 130 may also comprise a step 133 of generating the 3D plaque model by processing the arterial region model and the lumen model. In particular, the difference between the arterial region model and the lumen model may effectively represent a 3D plaque model. The plaque is the region located between the vessel and the lumen boundaries, that results from the growth of the intima layer of the artery during the progressive onset of atherosclerosis.

In some embodiments, generating the 3D plaque model may comprise decreasing a size of the arterial region model by a predetermined amount, e.g. scaling the size of the arterial region model down, and determining a model that represents the difference between the scaled arterial region model and the lumen model as the 3D plaque model. This embodiment takes into account a small thickness of the arterial wall. The scaling may be responsive to a known or measured thickness of the arterial wall, or may be a predetermined scaling (e.g. to account for an estimation of the wall thickness, e.g. based on population averages). The scaling may, for instance, be configured to account for a predetermined wall thickness, e.g. 0.5mm.

However, in some alternative examples, no scaling of the arterial model is performed, and the wall thickness is included as part of the plaque model (i.e. the arterial wall is treated as plaque).

Fig. 5 illustrates a plaque model 510 for understanding an embodiment. The plaque model is generated by determining a difference between a lumen model (not shown) and an arterial region model 520 (illustrated for the sake of improved understanding).

The plaque model 510 therefore fits inside the arterial region model. It will be apparent that, as both models are generated from the same 3D medical image, their models are automatically registered with respect to one another, which facilitates each of displaying both models with respect to one another.

The method 100 then perform a step 140 of determining, based on the identified image regions of the 3D medical image, plaque regions of the 3D plaque model, each plaque region being a region of the 3D plaque model that represents plaque of a different artery portion of the arterial region.

The 3D medical image and the 3D plaque model are automatically registered in the same co-ordinate space (as the 3D plaque model is generated from the 3D medical image). Image regions of the 3D medical image can therefore be mapped to corresponding plaque regions of the 3D plaque model. This effectively facilitates identification of parts of the 3D plaque model (i.e. the plaque regions) that model or represent the plaque found in a particular artery region. In some examples, a plurality of sub-sections of the 3D plaque model may be associated with the closet image region, thereby assigning sub-sections of the 3D plaque model to a particular plaque region.

This approach facilitates automatic plaque territory labelling.

Above-described examples can make use of segmentation algorithms. Medical image segmentation algorithms are well known in the art, and any suitable segmentation algorithm may be used. Examples of suitable segmentation algorithms include a Hankel transformation algorithm, a deformable contour segmentation algorithm and/or a machine-learning method. As such algorithms are well-known per se, the segmentation technique will not be explained in further detail for the sake of brevity only.

In the context of the present disclosure, a model comprises any data usable as a 3D representation. One suitable example of a model is a 3D mesh, having vertices (and faces) that define the boundaries of the model and therefore of the 3D representation. Other suitable examples will be apparent to the person skilled in the art, e.g. NURBS based modelling or equation-based modelling.

The method 100 may further comprise a step 150 of displaying the 3D plaque model, wherein the display may further identify the plaque regions (e.g. using different colors, labels, annotations or segmentation markers such as lines). Displaying the 3D plaque model may comprise a step of controlling a user interface to provide a visual representation of the 3D plaque model. Approaches for rendering and displaying a 3D model are well-known and understood by the person skilled in the art, and are not explained for the sake of brevity only.

In some examples, step 150 may further comprise displaying the arterial region model (e.g. if generated in step 132). The arterial region model and the 3D plaque model are automatically registered with respect to one another. Displaying the two models may comprise overlaying the arterial region model over the 3D plaque model (e.g. with a non-zero transparency for the arterial region model).

Fig. 5 also provides an example display of the arterial region model and the 3D plaque model.

In some examples, step 150 may further comprise displaying an indicator of the image regions, e.g. identifying different artery portions of the arterial region model.

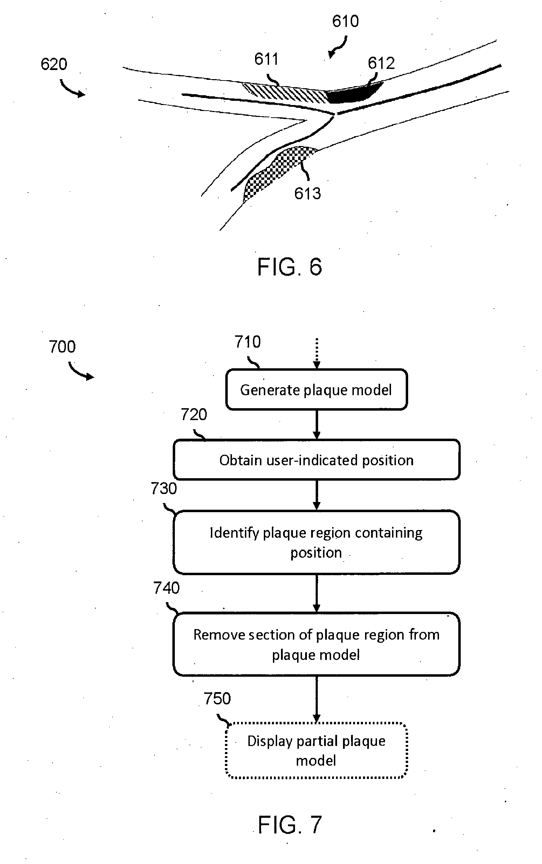

Fig. 6 illustrates an example of a display of the 3D plaque model 610 and the arterial model 620 (in the form of a 2D slice of a larger display). The 3D plaque model is configured so that different plaque regions 611, 612, 613 are identified (e.g. using different hatching). Each plaque region is associated with a different artery portion, e.g. a different image region.

For the sake of completeness, Fig. 6 also illustrates an indicator of different image regions, e.g. representing different artery portions.

Turning back to Fig. 1, the method 100 may further comprise a step 160 of processing each plaque region to calculate a measure of plaque in each artery portion of the arterial region. This may comprise, for example, determining a total volume of plaque (e.g. in mm3) for each plaque region. As another example, the measure of plaque may comprise a relative amount of plaque contained in each plaque region compared to a total amount of plaque in the 3D plaque model.

As the 3D plaque model is generated from the 3D image data, known measurements and sizes in the 3D image data will be directly mapped or represented in the 3D plaque model. In other words, the scale of the 3D plaque model is known. This facilitates measurement of a total amount of plaque in each plaque region, e.g. a measurement of plaque burden in each plaque region.

The method 100 may further comprise a step 165 of displaying the calculated measures of plaque at a user interface. Step 165 may comprise, for example, controlling a user interface to provide a visual representation of the calculated measure of plaque in each artery of the arterial region.

The display of the calculated measures-of plaque may, for example, be in the form of a bar chart, formed of vertical or horizontal bars. Other suitable approaches for displaying the calculated measures of plaque will be apparent to the skilled person, e.g. a pie chart.

It is recognized that a measure of plaque in different arteries provides useful clinical information for assessing a patient. In particular, a plaque burden in certain arteries may be more symptomatic or indicative of risk for cardiovascular disease than other arteries. By way of example only, plaque build-up in the external carotid artery is less problematic (e.g. less risk of cardiovascular problems) than plaque build-up in the common and internal carotid arteries.

Providing artery-specific information on the measure of plaque thereby provides useful clinical information for aiding a clinician in assessing a condition and/or diagnosis of a subject.

Generally, method 100 may comprise a step of controlling a user interface to provide a visual representation of data derived from plaque regions and/or the plaque regions themselves.

Fig. 7 is a flowchart illustrating a method 700 according to an embodiment.

The method 700 comprises a step 710 of obtaining or generating a 3D plaque model, e.g. by performing the process described with reference to Fig. 1.

The method comprises a step 720 of obtaining a user-indicated position. The user-indicated position may be identified, by a user, at a user interface (e.g. by clicking or double clicking on a visual representation of the 3D plaque model). The user-indicated position is with respect to the 3D plaque model.

If a visual representation of the 3D plaque model is displayed to a user, step 720 may comprise providing a visual representation (i.e. visual feedback) of the user-indicated position with respect to the displayed plaque model, e.g. by overlaying the 3D plaque model with a visual representation of the user-indicated position.

The method then performs a step 730 of identifying the plaque region containing the user-indicated position. The bounds of each plaque region are known, so that it can be readily determined which plaque region contains the user-identified position.

The method then performs a step 740 of removing a section of the identified plaque region from the plague model, to thereby generate a partial 3D plaque model. The removed section corresponds to a part of the plaque region that extends away from the other plaque regions, e.g. in a direction away from the bifurcation.

Thus, steps 730 and 740 effectively generate a partial 3D plaque model.

The method 700 may comprise a step 750 of displaying the partial 3D plaque model, e.g. generating a visual representation of the partial 3D plaque model. A position of the user-indicated position may also be indicated on the visual representation of the partial 3D plaque model. This may be in the form of a circle, ring or polygon that follows the contours of the 3D plaque model and/or arterial region model at the user-indicated position.

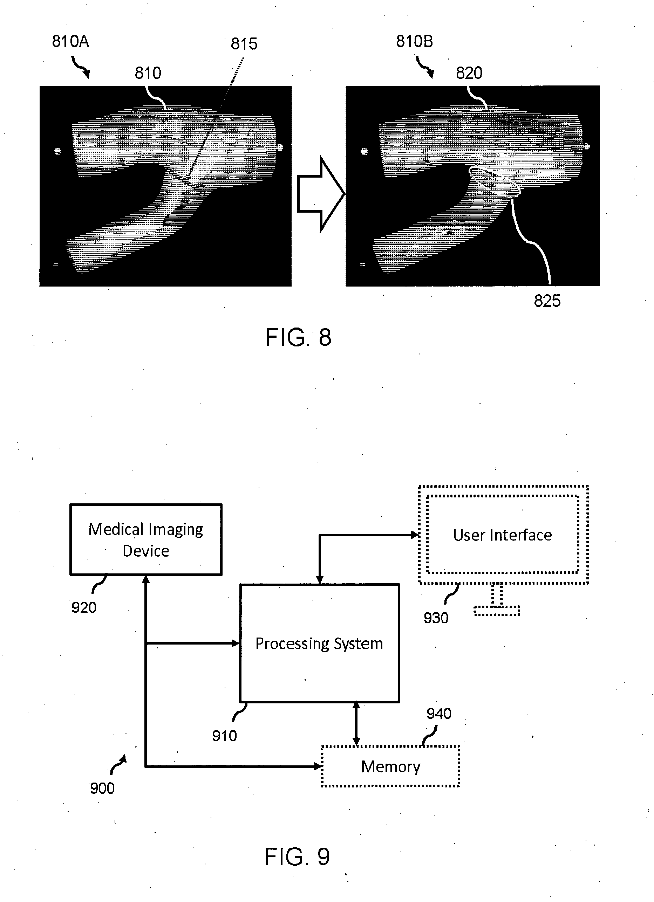

Fig. 8 illustrates an example of performing method 700 on a 3D plaque model 810. A first image 800A illustrates a 3D plaque model 810 upon which a user-indicated position 815 is identified. The 3D plaque model then undergoes steps 730 and 740 to produce a partial 3D plaque model 820, which is visually represented by a second image 800B. A visual representation of the user-indicated position 825 is also illustrated.

The partial plaque model provides a clinician with a valuable tool for visualizing plaque only in certain regions of the arterial model, e.g. those regions considered to contribute most heavily to adverse medical effects.

Fig. 9 illustrates a system 900 according to an embodiment. The system comprises a processing system 910 according to an embodiment of the invention, where the processing system is configured to perform a method according to any herein described embodiment.

The processing system 910 is configured to obtain a 3D medical image comprising a representation of an arterial region of the subject, the arterial region containing at least two connected artery portions, each artery portion belonging to a different artery and/or arterial branch of the subject. The 3D medical image may be obtained directly from a medical imaging device 920 of the system 900 and/or a memory 940 of the system 900. The memory may store, for example, 3D medical images generated by the medical imaging device.

The processing system may comprise an input interface (not shown) configured to receive signals carrying the 3D medical image, e.g. from the medical imaging device and/or the memory 940.

Suitable examples of medical imaging devices that are capable of generating 3D medical images are well known to the skilled person. Some examples, suitable for generating 3D ultrasound images, include the Philips iE33 systems or the Philips EPIQ and Affiniti systems. Other examples include an MRI scanner and/or a CT scanner that generate 3D medical images.

The processing system 910 is configured to perform image segmentation on the 3D medical image to identify, in the 3D medical image, two or more image regions, each image region representing a different artery portion of the arterial region. The processing system 910 is also configured to process the 3D medical image to generate a 3D plaque model, being a 3D model of plaque found in the arterial region represented in the 3D medical image. The processing system is also configured to determine, based on the identified image regions of the 3D medical image, plaque regions of the 3D plaque model, each plaque region being a region of the 3D plaque model that represents plaque of a different artery portion of the arterial region.

The processing system 910 may be configured to control a user interface 930 (of the system 900) to provide a visual representation of the 3D plaque model, wherein the visual representation further identifies each plaque region of the 3D plaque model. The processing system may comprise an output interface configured to provide signals to the user interface 930 to control an operation of the user interface.

In some examples, the processing system 910 may store the generated 3D plaque model, e.g. in the memory 940.

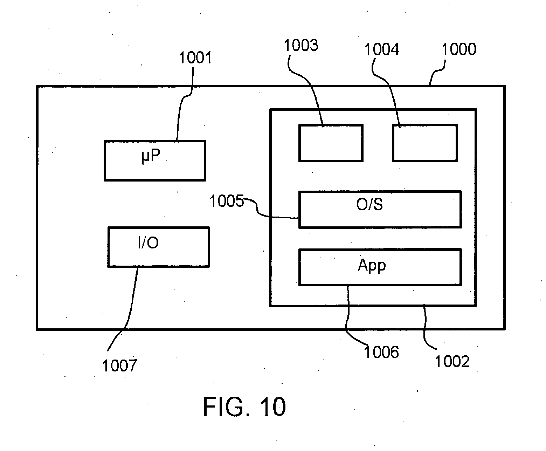

By way of further example, Fig. 10 illustrates an example of a processing system 1000 within which one or more parts of an embodiment may be employed. The processing system illustrates one example of a processing system suitable for use with the system 900 of Fig. 9.

Various operations discussed above may utilize the capabilities of the processing system 1000. For example, one or more parts of a system for generated plaque information of a subject may be incorporated in any element, module, application, and/or component discussed herein. In this regard, it is to be understood that system functional blocks can run on a single computer or may be distributed over several computers and locations (e.g. connected via internet).

The processing system 1000 includes, but is not limited to, PCs, workstations, laptops, PDAs, palm devices, servers, storages, and the like. Generally, in terms of hardware architecture, the processing system 1000 may include one or more processors 1001, memory 1002, and one or more I/O devices 1007 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 1001 is a hardware device for executing software that can be stored in the memory 1002. The processor 1001 can be virtually any custom made or commercially available processor, a graphics processing unit (GPU), a central processing unit (CPU), a digital signal processor (DSP), or an auxiliary processor among several processors associated with the processing system 1000, and the processor 1001 may be a semiconductor based microprocessor (in the form of a microchip) or a microprocessor.

The memory 1002 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 1002 may incorporate electronic, magnetic, optical, and/or other types of storage media. Note that the memory 1002 can have a distributed architecture, where various components are situated remote from one another, but can be accessed by the processor 1001.

The software in the memory 1002 may include one or more separate programs, each of which comprises an ordered listing of executable instructions for implementing logical functions. The software in the memory 1002 includes a suitable operating system (O/S) 1005, compiler 1004, source code 1003, and one or more applications 1006 in accordance with exemplary embodiments. As illustrated, the application 1006 comprises numerous functional components for implementing the features and operations of the exemplary embodiments. The application 1006 of the processing system 1000 may represent various applications, computational units, logic, functional units, processes, operations, virtual entities, and/or modules in accordance with exemplary embodiments, but the application 1006 is not meant to be a limitation.

The operating system 1005 controls the execution of other computer programs, and provides scheduling, input-output control, file and data management, memory management, and communication control and related services. It is contemplated by the inventors that the application 1006 for implementing exemplary embodiments may be applicable on all commercially available operating systems.

Application 1006 may be a source program, executable program (object code), script, or any other entity comprising a set of instructions to be performed. When a source program, then the program is usually translated via a compiler (such as the compiler 1004), assembler, interpreter, or the like, which may or may not be included within the memory 1002, so as to operate properly in connection with the O/S 1005. Furthermore, the application 1006 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 1007 may include input devices such as, for example but not limited to, a mouse, keyboard, scanner, microphone, camera, etc. Furthermore, the I/O devices 1007 may also include output devices, for example but not limited to a printer, display, etc. Finally, the I/O devices 1007 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 1007 also include components for communicating over various networks, such as the Internet or intranet.

If the processing system 1000 is a PC, workstation, intelligent device or the like, the software in the memory 1002 may further include a basic input output system (BIOS) (omitted for simplicity). The BIOS is a set of essential software routines that initialize and test hardware at startup, start the O/S 1005, and support the transfer of data among the hardware devices. The BIOS is stored in some type of read-only-memory, such as ROM, PROM, EPROM, EEPROM or the like, so that the BIOS can be executed when the processing system 1000 is activated.

When the processing system 1000 is in operation, the processor 1001 is configured to execute software stored within the memory 1002, to communicate data to and from the memory 1002, and to generally control operations of the processing system 1000 pursuant to the software. The application 1006 and the O/S 1005 are read, in whole or in part, by the processor 1001, perhaps buffered within the processor 1001, and then executed.

When the application 1006 is implemented in software it should be noted that the application 1006 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 1006 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The skilled person would be readily capable of developing a processing system for carrying out any herein described method. Thus, each step of the flow chart may represent a different action performed by a processing system, and may be performed by a respective module of the processing system.

Embodiments may therefore make use of a processing system. The processing system can be implemented in numerous ways, with software and/or hardware, to perform the various functions required. A processor is one example of a processing system which employs one or more microprocessors that may be programmed using software (e.g., microcode) to perform the required functions. A processing system may however be implemented with or without employing a processor, and also may be implemented as a combination of dedicated hardware to perform some functions and a processor (e.g., one or more programmed microprocessors and associated circuitry) to perform other functions.

Examples of processing system components that may be employed in various embodiments of the present disclosure include, but are not limited to, conventional microprocessors, application specific integrated circuits (ASICs), and field-programmable gate arrays (FPGAs).

In various implementations, a processor or processing system may be associated with one or more storage media such as volatile and non-volatile computer memory such as RAM, PROM, EPROM, and EEPROM. The storage media may be encoded with one or more programs that, when executed on one or more processors and/or processing systems, perform the required functions. Various storage media may be fixed within a processor or processing system or may be transportable, such that the one or more programs stored thereon can be loaded into a processor or processing system.

It will be understood that disclosed methods are preferably computer-implemented methods. As such, there is also proposed the concept of a computer program comprising code means for implementing any described method when said program is run on a processing system, such as a computer. Thus, different portions, lines or blocks of code of a computer program according to an embodiment may be executed by a processing system or computer to perform any herein described method. In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. A computer-implemented method (100, 700) of generating plaque information of a subject; the computer-implemented method comprising:
obtaining (110) a 3D medical image comprising a representation of an arterial region of the subject, the arterial region containing at least two connected artery portions, each artery portion belonging to a different artery and/or arterial branch of the subject;
performing (120) image segmentation on the 3D medical image to identify, in the 3D medical image, two or more image regions, each image region representing a different artery portion of the arterial region;
processing (130) the 3D medical image to generate a 3D plaque model, being a 3D model of plaque found in the arterial region represented in the 3D medical image; and
determining (140), based on the identified image regions of the 3D medical image, plaque regions of the 3D plaque model, each plaque region being a region of the 3D plaque model that represents plaque of a different artery portion of the arterial region.

2. The computer-implemented method of claim 1, wherein the arterial region includes a portion of the common carotid artery, a portion of the internal carotid artery and a portion of the external carotid artery.

3. The computer-implemented method of any of claims 1 or 2, further comprising a step (150) of controlling a user interface (930) to provide a visual representation of the 3D plaque model, wherein the visual representation further identifies each plaque region of the 3D plaque model.

4. The computer-implemented method of any of claims 1 to 3, comprising a step (132) of processing the 3D medical image to generate a 3D arterial region model, being a 3D model of the outer bounds of all the artery portions contained in the arterial region of the subject represented in the 3D medical image.

5. The computer-implemented method of claim 4, further comprising a step of controlling a user interface to provide a visual representation of the 3D arterial region model.

6. The computer-implemented method of claim 5, when dependent upon claim 3, wherein the step (150) of controlling the user interface to provide a visual representation of the 3D plaque model comprises: providing a visual representation of the 3D plaque model and the 3D arterial region model at the user interface registered with respect to one another.

7. The computer-implemented method of any of claims 4 to 6, wherein the step of processing the 3D medical image to generate a 3D plaque model comprises:
processing (131) the 3D medical image to generate a 3D lumen model, being a 3D model of any lumens in the arterial region; and
processing (133) the 3D arterial region model and the 3D lumen model to calculate the 3D plaque model.

8. The computer-implemented method of any of claims 1 to 7, wherein each image region represents a centerline of a different artery portion of the arterial region.

9. The computer-implemented method of any of claims 1 to 8, further comprising processing (160) each plaque region to calculate a measure of plaque in each artery portion of the arterial region.

10. The computer-implemented method of claim 9, further comprising a step of controlling (165) a user interface to provide a visual representation of the calculated measure of plaque in each artery of the arterial region.

11. The computer-implemented method of any of claims 9 or 10, wherein the measure of plaque is a volume of plaque.

12. The computer-implemented method (700) of any of claims 1 to 11, further comprising:
receiving (720) a user input providing a user-indicated position on the 3D plaque model; and
generating a partial 3D plaque model by processing the 3D plaque model and the user-indicated position, the generating comprising:
identifying (730) a selected plaque region, being the plaque region of the 3D plaque model that contains the user-indicated position; and
removing (740), from the 3D plaque model, a section of the selected plaque region that extends from the user-identified position away from the other plaque regions of the 3D plaque model.

13. The computer-implemented method of claim 12, further comprising a step of controlling (750) a user interface to provide a visual representation of the partial 3D plaque model.

14. A computer program product comprising computer program code means which, when executed on a computing device having a processing system, cause the processing system to perform all of the steps of the computer-implemented method according to any of claims 1 to 13.

15. A processing system (910, 1000) for generating plaque information of a subject; the processing system being configured to:
obtain (110) a 3D medical image comprising a representation of an arterial region of the subject, the arterial region containing at least two connected artery portions, each artery portion belonging to a different artery and/or arterial branch of the subject;
perform (120) image segmentation on the 3D medical image to identify, in the 3D medical image, two or more image regions, each image region representing a different artery portion of the arterial region;
process (130) the 3D medical image to generate a 3D plaque model, being a 3D model of plaque found in the arterial region represented in the 3D medical image; and
determine (140), based on the identified image regions of the 3D medical image, plaque regions of the 3D plaque model, each plaque region being a region of the 3D plaque model that represents plaque of a different artery portion of the arterial region.
